# EUROPEAN PATENT SPECIFICATION

(11) **EP 1 658 315 B1**
(45) Date of publication and mention of the grant of the patent: **28.01.2009**
(21) Application number: 04764281.4
(22) Date of filing: 18.08.2004
(51) Int. Cl.: C08F 8/46, C08F 110/06

(54) **PROCESS FOR ENHANCING THE MELT STRENGTH OF POLYPROPYLENE**
VERFAHREN ZUR ERHÖHUNG DER SCHMELZEFESTIGKEIT VON POLYPROPYLEN
PROCEDE PERMETTANT D'AMELIORER LA RESISTANCE A LA FLAMME DU POLYPROPYLENE

(30) Priority: 27.08.2003 EP 03077671; 26.09.2003 US 506286 P
(43) Date of publication of application: 24.05.2006
(73) Proprietor: Flexsys B.V., 7418 AJ Deventer (NL)
(72) Inventor: OLDE HANTER, Lambertus, Gerhardus, Johannus, NL-7595 ME Weerselo (NL); EISENHUTH, Ludwig, 63785 Obernburg (DE); DE HOOG, Arie, Jacob, NL-7339 HB Ugchelen (NL); SCHNEIDER, Peter, 46446 Emmerich (DE); MASLOW, Wasil, 7411 EK Deventer (NL)
(74) Representative: Beetz, Tom
(86) International application number: PCT/EP2004/009297
(87) International publication number: WO 2005/021607

(56) References cited:
- WO-A-97/49759
- DE-C- 19 500 426

## Description

The invention relates to a process for enhancing the melt strength of polypropylene (PP), to a composition for said process, to polypropylene with enhanced melt strength, and to the use of said composition of polypropylene for making an article.

Processes for enhancing the melt strength of PP are known. For instance in WO 99/27007 PP is mixed with at least a peroxydicarbonate to give PP with enhanced melt strength. This method has the disadvantage that peroxide compounds are required. Peroxides generally unfavorably affect the molecular weight of the starting PP by cleaving the polymer chains. Furthermore, the use of peroxides is hampered by serious safety risks, particularly by the explosion risk. Other references using peroxide initiators are EP 907677 and JP 60055012. The latter reference, moreover, discloses an adhesive compound further comprising a hydroxy group-containing organic compound, whereas no enhanced melt strengths are reported.

In US 2003/0092816 enhanced melt strength is obtained by making a PP composition with smectic clay that has been ion-exchanged and intercalated with a quaternary ammonium compound and a PP grafted with an ethylenically unsaturated carboxylic acid. Such compositions with modified clays and grafted polymers are not always optimal for any application.

In German patent application DE 19500426 the problem is addressed of using peroxide initiators, indicating the occurrence of chain cleavage on using peroxides. At the same time this reference refers to WO 90/13582, wherein attempts have been described to avoid chain cleavage by minimizing the amount of peroxide. However, in WO 90/13582 it was found that the yield of maleation of polypropylene is restricted when using low amounts of peroxide. For that reason DE 19500426, as well as WO 90/13582, still makes use of significant amounts of peroxide, i.e. according to the examples of DE 19500426 about 0.2%, but prevents the chain cleavage by using a third component, particularly pentaerythritoltriacrylate, in the preparation of grafted copolymers. Such addition may affect the properties of the grafted polymer, and moreover grafted polymers are not always optimal.

To alleviate to above disadvantages there is a need for a simple extrusion process for making PP with enhanced melt strength, which is free, or at least substantially free, from peroxides and also from hydroxy group-containing organic compounds.

To this end, the present invention provides a process for enhancing the melt strength of polypropylene, without grafting the PP, comprising the steps of:
- mixing the polypropylene with at least 0.1-8 wt.% of an oligomer of maleimide or an oligomer of a maleimide derivative, based on the amount of polypropylene, in the absence of peroxide or in the presence of less than 0.01 wt.% of peroxide based on the total weight of the composition;
- reacting said polypropylene and oligomer of maleimide or oligomer of a maleimide derivative at a temperature between 150 °C and 300 °C.

The polypropylene is mixed with oligomer of maleimide or oligomer of a maleimide derivative in the absence of peroxide or in the presence of less than 0.01 wt.% of peroxide based on the total weight of the composition. Preferably, peroxide is totally absent. The product obtained is a composition comprising PP and oligo- and/or polymers of maleimide, wherein PP is not grafted by the maleimide, thereby usually leading to much higher melt strengths than obtained with grafted PP. This novel method of making novel compositions have that advantage that peroxides are not longer necessary, thereby preventing chain cleavage of the PP.

In another embodiment of this invention the process for enhancing the melt strength of polypropylene comprising a step wherein the oligomer of maleimide or the oligomer of a maleimide derivative is prepared *in situ* by mixing the polypropylene with maleimide monomer or a maleimide derivative monomer and a base.

The term "polypropylene" (PP) refers to polymers or mixtures of polymers containing at least 50 % by weight of polymerized propylene. Polymerization catalysts may be Ziegler-Natta, metallocene, or other types giving stereospecific polymerization of propylene. Use may be made in this connection of homopolymers of propylene; random, alternating, or block copolymers; or random, alternating, or block terpolymers of propylene and another olefin. Generally, a propylene copolymer or terpolymer will contain one or more other olefins, such as ethylene, butene, pentene, hexene, heptene, or octene, but it may also comprise other olefinically unsaturated monomers or combinations of these, such as acrylates, styrene, styrene derivatives, acrylonitrile, vinyl acetate, vinylidene chloride, and vinyl chloride.

It is preferred here to restrict the content of olefins other than propylene to 30% by weight of the copolymer. Especially suited are homopolymers of propylene, copolymers of propylene and ethylene or mixtures of polypropylene and polyethylene containing not more than 10% by weight of polymerized ethylene.

The melting point of normally solid commercially available PP is about 160-170 °C. The melting point of propylene copolymers and tercopolymers in general can be lower. The process of the invention preferably is carried out at a temperature in the range of from 150 to 300°C, more preferably from 160 to 250 °C, and most preferably from 170 to 225°C.

The molecular weight of the PP used can be selected from a wide range. Indicative of the molecular weight is the melt flow index (MFI). Use may be made of a PP having a MFI from 0.1 to 1000 g/10 min (230 °C, 21.6 N). Preferably, use is made of a PP having a MFI from 0.5 to 250 g/10 min.

The process according to the present invention is suitably carried out in melt mixing equipment known to a person skilled in the art. Preferably, an extruder or a kneader is used. More preferably, use is made of a single or twin-screw extruder. An internal mixer such as a Banbury mixer optionally coupled to an extruder may also be used.

The terms "maleimide" and "maleimide derivative" as herein used include maleimide, maleimide derivatives, and maleimide oligomers. The maleimide or the maleimide derivative may be mixed first with the PP and then the mixture may be extruded. Alternatively, the maleimide or the maleimide derivative may be added to the extruder already containing the PP by injection or spraying, or may be added together with the PP. This is especially preferred when oligomers are used. When monomers are used the maleimide or the maleimide derivative is added together with the base. It is preferred to introduce a solid or semi-solid maleimide or maleimide derivative together with the PP into the extruder, for example, by using a feeder. The temperature setting of the extruder should allow the PP to melt, i.e. above 150 °C. The screw speed typically is from about 25 to 500 rpm. According to the invention the preferred maleimide or maleimide derivative is derived from biscitraconic acid or the oligomer thereof. The quantity of maleimide or maleimide derivative is 0.1-8 wt.% based on the weight of PP. Preferably, the quantity of maleimide or the maleimide derivative is 1-4 wt.%.

The base may be any base that is known in the art. Particularly useful bases are tertiary amino bases, for instance bridged alicyclic nitrogen bases such as 3-quinuclidinol, 1,8-diazabicyclo[5,4,0]undecene, or 1,4-diazabicyclo[2,2;2]octane (commercially known as Dabco®), substituted imidazoles such as 2-ethyl-4-methylimidazole, substituted pyridines such as 4-(dimethylamino)pyridine, guanidine and derivative thereof, inorganic bases such as sodium hydroxide, and trialkylamines. Practical quantities are 1 to 100 wt.% based on the weight of maleimide or a derivative thereof.

Normal residence time in the extruder is 15 sec to 30 min. The longer residence times can be achieved by using additional static mixers, and the like.

The extruded strand may be further processed as known to one of ordinary skill in the art. Normally, the extruded strand is fed through a water bath and granulated using a granulator. Alternatively, the extruded modified PP is formed directly into a desired end product.

It is preferred to carry out the process of the present invention in an atmosphere of an inert gas, such as nitrogen or argon. Preferably, nitrogen is used.

Solid as well as liquid maleimide or maleimide derivative may be used in the process according to the present invention. A solution of maleimide or a maleimide derivative in an inert solvent, such as isododecane, or in the form of frozen flakes, may also be used. Suitable inert solvents are known to one skilled in the art. It is preferred to use a solid maleimide or maleimide derivative in the form of, for example, flakes, finely divided particles (powder), or a liquid maleimide or maleimide derivative.

Optionally, the modified PP may be purified, modified, or molded in one or more process steps, prior to its final processing. Thus, there may be further modification using another polymer or monomer in order to enhance the end product's compatibility with other materials. Alternatively, the modified PP may be degraded or, on the contrary, crosslinked slightly, to increase its processability and/or applicability. The modified PP according to the invention has a melt strength that is at least 1.5, preferably 1.8 times higher than the melt strength of the starting not-modified PP. Generally, to achieve the desired end conventional adjuvants in an amount known to one skilled in the art, such as antioxidants, UV-stabilizers, lubricants, antidegradants, foaming agents, nucleating agents, fillers, pigments and/or antistatic agents are added to the PP. These adjuvants can be added to the PP before as well as during or after the modifying step according to the invention. For example, a blowing agent can be added or gas can be injected into the extruder before, during or after the modification, in order to produce foamed PP.

The PP obtained by the invention process does not show a substantial difference in weight average molecular weight, indicating that cleavage of the polymer chain does not occur. Only oligomers of maleimide or oligomers of maleimide derivative or mixtures thereof (or their precursors, i.e., mixtures of maleimide monomers or maleimide derivative monomers with bases) have been found to give the desired enhanced melt strength in the process of the present invention. Oligomers of maleimide or oligomers of maleimide derivative or mixtures thereof can for instance be prepared by anionic or radical polymerization of maleimide or maleimide derivative. It was found that such oligomers could be directly added tot the PP in the melt phase, or that such oligomers could *in situ* be prepared by the addition of maleimide monomers or maleimide derivative monomers in the presence of a base to the PP, without leading to modified polypropylenes of significant different melt strength.

The PP obtained using the process according to the present invention may be processed into an end product without any further adaptations if so desired. The modified PP can be processed into the desired end product, such as foams, fibers, or sheets in all kinds of ways known to the skilled person, with the processing conditions generally being dependent on the material and equipment employed, such as, for example, by foaming, foam molding, extrusion, injection molding, blow molding, extrusion coating, profile extrusion, or thermoforming.

The invention is illustrated by the following Examples.
The following materials and methods are employed in the Examples:
Polypropylene: PP HC001A-B1, ex Borealis, Austria
Flexlink®: meta-xylylene biscitraconimide ex Flexsys, USA
Dabco®: 1,4-diazabicyclo[2,2,2]octane, ex Tosoh, Japan

### PROCEDURE A

### Mixing procedure:

The maleimide compound Flexlink® and Dabco® were added to polypropylene powder in a bucket and tumble-mixed by hand for 5 minutes at room temperature. Compounds were extruded immediately after mixing.

### Compounding procedure:

All compounds were melt-modified by extrusion in a Haake "TW100" twin screw extruder with intensive mixing screws attached to a Haake "Rheocord System 40". During the experiment nitrogen was passed in counterflow from the hopper up through the feeder.

The extruder comprised a barrel housing four consecutive temperature chambers, wherein the first chamber had a temperature of 180°C, the second 180 °C, the third 180 °C, and the fourth chamber 190 °C. The screw speed was 80 rpm. The extruded strand was fed through a water bath and granulated with an Automatic "ASG5" granulator.

### Test procedures:

MFI (Melt Flow Index), characterizing the flow behavior of a PP melt, was measured with a Goettfert Melt Indexer (model MP-D) according to DIN 53735 and ASTM 1238 (230 °C, 21.6 N load). Melt strength, i.e. the ability of a melt of PP to withstand a tensile elongation or stretching without breaking, was measured using one of two instruments:
- Instrument 1: a Goettfert Rheotens attached to a Goettfert Rheograph 2001 capillary rheometer (200°C, die geometry 30/1 mm, initial speed 20 mm/s, acceleration 1.2 mm/s², strand length 100 mm).
- Instrument 2: a Goettfert 71.97 (200°C, die geometry 30/2 mm, initial speed 18.5 mm/s, acceleration 30 mm/s², strand length 100 mm).

### Example 1:

1000 g of polypropylene powder were mixed with 30 g of Flexlink® and 2 g of Dabco® as described above. The mixture was melt extruded in a Haake "TW100" twin screw extruder under the conditions given above.

The obtained product had a MFI of 2.2 g/10 min and a melt strength of 42 cN (200 °C, acceleration 30 mm/s²). In comparison the non-modified polypropylene used has an MFI of 7.6 g/10 min and a melt strength of 22 cN (measured on Instrument 2).

### Example 2:

Example 1 was repeated, but 20 g of Flexlink® and 5 g of Dabco® were used.

The product had a melt flow of 2.1 g/10 min and a melt strength of 40 cN (measured on Instrument 2).

### Example 3:

40 g of Flexlink® and 8 g of Dabco® were dissolved in 200 ml of toluene and refluxed for 1 h. The toluene was removed and a mixture of oligomers was obtained wherein part of the C-C double bonds of the Flexlink® was changed by reaction (according to NMR analysis). 30 g of the thus obtained product were mixed with polypropylene powder as described above and melt extruded as in Example 1.

The product was clear but slightly brownish and had an MFI of 2.1 g/10 min and a melt strength of 42 cN (measured on Instrument 1).

### Example 4:

Example 1 was repeated, but 50 g of Flexlink® were used.

The product had a MFI of 2.3 g/10 min and a melt strength of 13.5 cN (measured on Instrument 1). The not modified PP used had a MFI of 7.6 g/10 min and a melt strength of 3.4 cN.

### Example 5:

Example 1 was repeated, but 30 g of meta-phenylene bismaleimide were used instead of Flexlink®, and no Dabco® was used.

The modified PP made in this way had a MFI of 0.9 g/10 min and a melt strength of 11 cN (measured on Instrument 1).

## Claims

1. A process for enhancing the melt strength of polypropylene comprising the steps of:
- mixing the polypropylene with at least 0.1-8 wt.% of an oligomer of maleimide or an oligomer of a maleimide derivative, based on the amount of polypropylene, in the absence of peroxide or in the presence of less than 0.01 wt.% of peroxide based on the total weight of the composition;
- reacting said polypropylene and oligomer of maleimide or oligomer of a maleimide derivative at a temperature between 150 °C and 300 °C.

2. The process according to claim 1 wherein the oligomer of maleimide or the oligomer of a maleimide derivative is prepared *in situ* by mixing the polypropylene with maleimide monomer or a maleimide derivative monomer and a base.

3. The process according to claim 1 wherein the oligomer of a maleimide derivative is derived from biscitraconic acid.

4. The process according to claim 2 wherein the maleimide derivative is derived from biscitraconic acid and the base is 1,4-diazabicyclo[2,2,2]octane.

5. A composition, which is free from peroxide or contains less than 0.01 wt.% of peroxide based on the total weight of the composition, comprising polypropylene and based on the amount of polypropylene 0.1-8 wt.% of an oligomer of maleimide or an oligomer of a maleimide derivative, or a mixture of 0.1-8 wt.% of a monomer of maleimide or a maleimide derivative monomer and a base.

6. The composition of claim 5 wherein the maleimide derivative is derived from biscitraconic acid and the base is 1,4-diazabicyclo[2,2,2]octane.

7. A polypropylene which is free from peroxide polypropylene or contains less than 0.01 wt.% of peroxide, obtainable from the composition of claim 5 or 6 with enhanced melt strength, which is at least 1.5 times higher that the melt strength of the corresponding non-modified polypropylene.

8. Use of the composition of claim 5 or 6 or of the polypropylene of claim 7 for making a foam, fiber, or sheet.

## Patentansprüche

1. Verfahren zur Erhöhung der Schmelzfestigkeit von Polypropylen, umfassend die Schritte:
- Mischen des Polypropylens mit wenigstens 0,1 bis 8 Gew.-% eines Oligomers von Maleinimid oder eines Oligomers eines Maleinimid-Derivats, bezogen auf die Menge des Polypropylens, in Abwesenheit von Peroxid oder in Gegenwart von weniger als 0,01 Gew.-% Peroxid, bezogen auf das Gesamtgewicht der Zusammensetzung;
- Umsetzen des Polypropylens und des Oligomers von Maleinimid oder des Oligomers eines Maleinimid-Derivats bei einer Temperatur zwischen 150°C und 300 °C.

2. Verfahren gemäß Anspruch 1, wobei das Oligomer von Maleinimid oder das Oligomer eines Maleinimid-Derivats in situ hergestellt wird, indem man das Polypropylen mit Maleinimid-Monomer oder einem Maleinimid-Derivat-Monomer und einer Base mischt.

3. Verfahren gemäß Anspruch 1, wobei das Oligomer eines Maleinimid-Derivats von Biscitraconsäure abgeleitet ist.

4. Verfahren gemäß Anspruch 2, wobei das Maleinimid-Derivat von Biscitraconsäure abgeleitet ist und es sich bei der Base um 1,4-Diazabicyclo[2.2.2]octan handelt.

5. Zusammensetzung, die frei von Peroxid ist oder weniger als 0,01 Gew.-% Peroxid, bezogen auf das Gesamtgewicht der Zusammensetzung, enthält und Polypropylen sowie, bezogen auf die Menge des Polypropylens, 0,1 bis 8 Gew.-% eines Oligomers von Maleinimid oder eines Oligomers eines Maleinimid-Derivats oder ein Gemisch von 0,1 bis 8 Gew.-% eines Monomers von Maleinimid oder eines Maleinimid-Derivat-Monomers und eine Base umfasst.

6. Zusammensetzung gemäß Anspruch 5, wobei das Maleinimid-Derivat von Biscitraconsäure abgeleitet ist und es sich bei der Base um 1,4-Diazabicyclo[2.2.2]octan handelt.

7. Polypropylen, das frei von Peroxid ist oder weniger als 0,01 Gew.-% Peroxid enthält und aus der Zusammensetzung gemäß Anspruch 5 oder 6 erhältlich ist und eine erhöhte Schmelzfestigkeit hat, die wenigstens 1,5-mal so hoch ist wie die Schmelzfestigkeit des entsprechenden nichtmodifizierten Polypropylens.

8. Verwendung der Zusammensetzung gemäß Anspruch 5 oder 6 oder des Polypropylens gemäß Anspruch 7 zur Herstellung eines Schaumstoffs, einer Faser oder Folie.

## Revendications

1. Procédé pour améliorer la résistance à la fusion de polypropylène comprenant les étapes de:
- mélange du polypropylène avec au moins 0,1 à 8% en poids, exprimés par rapport à la teneur en polypropylène, d'un oligomère de maléimide ou d'un oligomère d'un dérivé de maléimide, en l'absence de peroxyde ou en présence de moins de 0,01% en poids, exprimé par rapport au poids total de la composition, de peroxyde;
- réaction à une température comprise entre 150°C et 300°C, dudit polypropylène et de l'oligomère de maléimide ou de l'oligomère d'un dérivé de maléimide

2. Le procédé selon la revendication 1, **caractérisé en ce que** l'oligomère de maléimide ou l'oligomère d'un dérivé de maléimide est préparé in situ par mélange de polypropylène avec un monomère de maléimide ou un monomère d'un dérivé de maléimide et une base.

3. Le procédé selon la revendication 1, **caractérisé en ce que** le dérivé de maléimide dérive d'un acide bis-citraconique.

4. Le procédé selon la revendication 2, **caractérisé en ce que** le dérivé de maléimide dérive d'un acide bis-citraconique et **en ce que** la base consiste en 1,4-diazabicyclo[2,2,2] octane.

5. Une composition, exempte de peroxyde ou qui contient moins de 0,01% en poids, exprimé par rapport au poids total de la composition, de peroxyde, et qui comprend du polypropylène et 0,1 à 8% en poids, exprimés par rapport à la teneur en polypropylène, d'un oligomère de maléimide ou d'un oligomère d'un dérivé de maléimide ou un mélange de 0,1 à 8% en poids, d'un oligomère de maléimide ou d'un oligomère d'un dérivé de maléimide, et d'une base.

6. La composition selon la revendication 5, **caractérisé en ce que** le dérivé de maléimide dérive d'un acide bis-citraconique et **en ce que** la base consiste en 1,4-diazabicydo[2,2,2]octane.

7. Un polypropylène, exempte de peroxyde ou qui contient moins de 0,01% en poids de peroxyde, susceptible d'être obtenu à partir de la composition de la revendication 5 ou 6, présentant une résistance améliorée à la fusion qui est d'au moins 1,5 fois supérieure à la résistance à la fusion du polypropylène non- modifié correspondant.

8. Utilisation de la composition selon les revendications 5 ou 6 ou du polypropylène selon la revendication 7 pour la fabrication d'un mousse, de fibres ou de feuilles.
